# EUROPÄISCHE PATENTSCHRIFT

(11) **EP 3 937 067 B1**
(45) Veröffentlichungstag und Bekanntmachung des Hinweises auf die Patenterteilung: **25.11.2026**
(21) Anmeldenummer: 20184806.6
(22) Anmeldetag: 08.07.2020
(51) Int. Cl.: G06V 20/13, G06V 10/82

(54) **AUTOMATISCHE ERSTELLUNG EINER GEFAHRENKARTE**
AUTOMATIC CREATION OF A HAZARD MAP
ÉTABLISSEMENT AUTOMATIQUE D'UNE CARTE DE RISQUES

(43) Veröffentlichungstag der Anmeldung: 12.01.2022
(73) Patentinhaber: Airbus Defence and Space GmbH, 82024 Taufkirchen (DE)
(72) Erfinder: Ahrns, Ingo, 28199 Bremen (DE); Haskamp, Christoph, 28199 Bremen (DE)
(74) Vertreter: Marschall, Stefan

(56) Entgegenhaltungen:
- CHENG HUANG ET AL: "Vision-Based Hazard Detection with End-to-end Spatiotemporal Networks for Planetary Landing", JOURNAL OF PHYSICS: CONFERENCE SERIES, INSTITUTE OF PHYSICS PUBLISHING, BRISTOL, GB, vol. 1215, no. 1, 22 May 2019 (2019-05-22), pages 12023, XP020336761, ISSN: 1742-6596, [retrieved on 20190522], DOI: 10.1088/1742-6596/1215/1/012023
- PAOLO LUNGHI ET AL: "A multilayer perceptron hazard detector for vision-based autonomous planetary landing", ADVANCES IN SPACE RESEARCH, vol. 58, no. 1, 1 July 2016 (2016-07-01), AMSTERDAM, NL, pages 131 - 144, XP055759166, ISSN: 0273-1177, DOI: 10.1016/j.asr.2016.04.012
- DARIO L. SANCHO-PRADEL ET AL: "A Survey on Terrain Assessment Techniques for Autonomous Operation of Planetary Robots", JOURNAL OF THE BRITISH INTERPLANETARY SOCIETY, vol. 63, 1 January 2010 (2010-01-01), pages 206 - 217, XP055134620

## Beschreibung

Die vorliegende Erfindung betrifft ein Verfahren zum Erstellen einer Gefahrenkarte, ein Landungssteuerungsverfahren zur Steuerung eines Raumfahrzeugs bei einem extraterrestrischen Landeanflug, ein System zur Gefahrenerkennung sowie ein Raumfahrzeug, das zu einer extraterrestrischen Landung eingerichtet ist.

Bei der extraterrestrischen Landung ist die Auswahl eines geeigneten Landeortes für ein jeweiliges Raumfahrzeug von höchster Wichtigkeit. Dabei gilt es, Gefahren, die durch das jeweilige Gelände bedingt sind, rechtzeitig zu erkennen und ihnen gegebenenfalls auszuweichen. Mögliche Gefahrenquellen sind dabei beispielsweise Gegebenheiten, die ein Umkippen des jeweiligen Raumfahrzeugs beim Landevorgang verursachen könnten oder die eine geplante Nutzung des gelandeten Raumfahrzeugs (wie beispielsweise dessen Öffnen und/oder Entladen) erschweren oder sogar unmöglich machen würden. Spezielle Beispiele für derartige Gefahrenquellen sind besonders große Gefälle, Spalten oder Abbruchkanten im Gelände, insbesondere von Kratern (speziell an deren Rändern) und/oder große Gesteinsbrocken. Auch nicht einsehbare, beispielsweise abgeschattete Bereiche im Gelände können Gefahren bergen und sind daher vorzugsweise zu umgehen.

Da bisher existierendes Kartenmaterial keine ausreichende Auflösung hat, als dass darin alle möglichen Gefahren bereits ausreichend genau kartographiert wären, und da zudem Navigationslösungen, die den Aufenthaltsort einer Landefähre gegenüber etwaigem Kartenmaterial beinhalten, nicht genau genug sind, um anhand des Kartenmaterials und der Navigationslösung alleine einen sicheren Landeort genau bestimmen zu können, werden herkömmlicherweise während Landeanflügen Sensordaten zur Bestimmung einer jeweiligen räumlichen Struktur des Geländes erfasst und ausgewertet. Aus der jeweiligen räumlichen Rekonstruktion wird dann auf mögliche Gefahren geschlossen, für die jeweils ein zugehöriger Wert in eine sogenannte Gefahrenkarte (d.h. in ein Bild oder eine matrixförmige Datenstruktur) eingetragen wird.

Für die Gefahrenerkennung bei einer automatischen Mondlandung wird dabei gemäß dem aktuellen Stand der Technik eine aufwendige Sensorik eingesetzt. Als Sensoren werden abtastende 3D- Laserabstandssensoren (sog. Scanning-LIDAR) oder auch Entfernungsbildkameras (sog. Flash-LIDAR) verwendet, die eine dreidimensionale Rekonstruktion des Geländes ermöglichen. Diese LIDAR Geräte können dabei noch mit Kameras kombiniert sein, um beispielsweise Schattenbereiche zu bestimmen, die als nicht einsehbare Geländeanteile ebenfalls potenzielle Gefahren darstellen können.

Die scannenden LIDAR-Geräte haben für eine Mondlandefähre insbesondere die Nachteile, dass sie eine große Masse sowie eine relativ hohe Leistungsaufnahme haben und damit relativ viel Wärme abstrahlen. Darüber hinaus erzeugen abtastende LIDAR Geräte eine jeweilige 3D-Rekonstruktion als Folge aufgenommener dreidimensionaler Einzelpunktmessungen, die für einen Gesamtscan des Landegebietes eine erhebliche Dauer in Anspruch nehmen. Während dieser Zeit bewegt sich die Landefähre, sie kann beispielsweise mehrere 10 m fallen. Die aufgenommenen dreidimensionalen Daten sind daher räumlich verzerrt und müssen unter Zuhilfenahme der Navigationslösung der Eigenbewegung wieder entzerrt werden. Zudem kann eine Rotationsbewegung der Landefähre während der Datenaufnahme den Punktabstand (d.h. die Auflösung) auf dem Gelände vergrößern und damit zu einer räumlichen Auflösung führen, die kleinere Hindernisse nicht mehr wahrnehmbar macht. Um dies zu vermeiden und eine etwaige Ortsauflösung am Boden noch gewährleisten zu können, kann die Strahlrichtung des scannenden LIDARs mit der geschätzten Eigenbewegung der Landefähre gekoppelt und eine jeweilige Strahlrichtung gegebenenfalls angepasst werden. Dieser Vorgang ist jedoch hochkomplex und erfordert weitere Sensoren wie beispielweise eine Inertialmesseinheit.

Schriftlicher Stand der Technik ist bekannt aus CHENG HUANG ET AL: "Vision-Based Hazard Detection with End-to-end Spatiotemporal Networks for Planetary Landing", JOURNAL OF PHYSICS: CONFERENCE SERIES, INSTITUTE OF PHYSICS PUBLISHING, BRISTOL, GB, Bd. 1215, Nr. 1, 22. Mai 2019 (2019-05-22), Seite 12023, XP020336761, ISSN: 1742-6596, DOI: 10.1088/1742-6596/1215/1/012023 [gefunden am 2019-05-22], sowie aus PAOLO LUNGHI ET AL: "A multilayer perceptron hazard detector for visionbased autonomous planetary landing", ADVANCES IN SPACE RESEARCH, Bd. 58, Nr. 1, 1. Juli 2016 (2016-07-01), Seiten 131-144, XP055759166, AMSTERDAM, NL ISSN: 0273-1177, DOI: 10.1016/j.asr.2016.04.012, und aus DARIO L. SANCHO-PRADEL ET AL: "A Survey on Terrain Assessment Techniques for Autonomous Operation of Planetary Robots", JOURNAL OF THE BRITISH INTERPLANETARY SOCIETY, Bd. 63, 1. Januar 2010 (2010-01-01), Seiten 206-217, XP055134620.

Der vorliegenden Erfindung liegt die Aufgabe zugrunde, eine alternative Technik bereitzustellen, mittels deren geländebedingten Gefahren insbesondere bei einer extraterrestrischen Landung ausgewichen werden kann.

Die Aufgabe wird gelöst durch Verfahren gemäß den Ansprüchen 1 und 7, ein System gemäß Anspruch 8 und ein Raumfahrzeug gemäß Anspruch 10. Vorteilhafte Ausführungsformen sind in den Unteransprüchen, der Beschreibung und den Figuren offenbart.

Ein (erstes) erfindungsgemäßes Verfahren dient dem Erstellen einer Gefahrenkarte, insbesondere zur Verwendung für eine (teil- oder voll-) automatische extraterrestrische Landung (speziell auf dem Mond). Das Verfahren umfasst ein Aufnehmen (mindestens) eines Bildes von einem Gelände mittels einer monokularen Kamera und damit ein Erzeugen einer Mehrzahl an digitalen Bilddaten. Die digitalen Bilddaten enthalten somit insbesondere Information zu einer Vielzahl an Pixeln des aufgenommenen Bildes; das Attribut "digital" wird zu den Bilddaten im Folgenden zuweilen weggelassen. Das Aufnehmen des Bildes kann beispielsweise während eines Landeanflugs (auf einen Himmelskörper, insbesondere einen Mond, einen Asteroiden oder einen Planeten) erfolgen.

Im Gegensatz zu einer Entfernungsbildkamera handelt es sich bei der erfindungsgemäß eingesetzten Kamera um eine klassische Kamera, die mittels eines Objektivs ein 2-dimensionales Lichtbild der Umgebung auf einem Bildsensor erzeugt (schwarz/weiß oder in Farbe).

Weiterhin wird dem Verfahren zufolge automatisch eine Gefahrenkarte erstellt. Das Erstellen umfasst ein Transformieren der erzeugten digitalen Bilddaten, indem ein Transformationsoperator auf sie angewandt wird. Der Transformationsoperator umfasst dabei mehrere hintereinander auszuführende Faltungsoperatoren, d.h. er lässt sich als Zusammensetzung von mehreren Operatoren darstellen, wobei die Zusammensetzung eine (mathematische) Verkettung einer Mehrzahl an Operatoren enthält, unter denen mehrere Faltungsoperatoren sind. Der Transformationsoperator *T* kann beispielsweise in der Form *T = Qₙ* ° Qₙ₋₁° ... ° Q₁ darstellbar sein, wobei $n ∈ ℕ$ eine Anzahl ist und die Operatoren *Q₁, Q₂, ... , Qₙ* zwei oder mehr Faltungsoperatoren umfassen.

Insbesondere ist die Gefahrenkarte eine Datenstruktur, die zu mindestens einem Teil der Pixel des aufgenommenen Bildes (deren Information die digitalen Bilddaten enthalten) zugehörige Gefahrenwerte umfasst. Aus der Gefahrenkarte kann so die Prognose für die Gefahr einer Landung in einem vom Pixel erfassten Punkt bzw. Bereich im Gelände ausgelesen werden.

Dabei kann die Gefahrenkarte als Resultat der Transformation erstellt werden, also als das mathematische Bild (d.h. als Funktionswert) der Bilddaten unter dem Transformationsoperator. Die transformierten Bilddaten bilden dann also direkt die Gefahrenkarte.

Der Transformationsoperator wird so ausgebildet, dass ein durch die transformierten Bilddaten gebildetes Transformationsresultat eine Geländeneigungskarte ergibt, aus der dann die Gefahrenkarte erst berechnet wird; eine derartige Geländeneigungskarte enthält dabei als Einträge Werte, die eine jeweilige Neigung des Geländes in einem jeweils (einem Eintrag) zugeordneten Punkt angeben, sofern die Neigung in dem jeweiligen Punkt erkennbar ist, also bestimmt werden kann. Die Berechnung der Gefahrenkarte kann dann beispielsweise die in der Geländeneigungskarte eingetragenen Neigungen, vorzugsweise aber auch eine **ggf.** vorliegende Unmöglichkeit der Erkennbarkeit einer Neigung (z.B. infolge einer fehlenden Einsehbarkeit) berücksichtigen.

Das Aufnehmen des Bildes kann insbesondere während eines Flugs, speziell eines Landeanflugs auf einen Himmelskörper erfolgen. Vorzugsweise erfolgt es außerhalb der Erdatmosphäre.

Gemäß vorteilhaften Ausführungsformen ist die Gefahrenkarte bildlich in Form eines Ergebnisbildes darstellbar; das Verfahren kann dann vorzugsweise ein Darstellen der Gefahrenkarte an einem Bildschirm umfassen. Insbesondere wenn eine jeweilige Landung einer menschlichen Kontrolle unterliegt, wird so ein unmittelbares Erkennen jeweiliger Gefahren erleichtert.

Vorzugsweise sind das aufgenommene Bild und das Ergebnisbild in derartigen Ausführungsformen zueinander pixelkonform, d.h. die Bildpunkte im Ergebnisbild entsprechen in ihrer jeweiligen Position einem jeweils zugehörigen Pixel des aufgenommenen Bildes und geben die Gefahr einer Landung im von diesem Pixel erfassten Punkt bzw. Bereich im Gelände an. Bildpunkte im Ergebnisbild können beispielsweise jeweils durch eine jeweilige Farbe oder einen jeweiligen Grauwert einen Grad an Unsicherheit bzw. an Gefahr (für eine Landung) anzeigen, die für einen zugehörigen Punkt bzw. Bereich im Gelände prognostiziert wird. Dabei können lediglich zwei Farben/Grauwerte und damit Grade an Gefahren in dem Ergebnisbild auftreten, oder das Ergebnisbild kann mindestens drei Farben/Grauwerte enthalten: Die Gefahrenkarte kann also als binäre Gefahrenkarte erstellt werden (die nur in "sicher" und "unsicher" aufteilt), oder sie kann drei oder mehr unterschiedliche Gefahrenwerte darstellen. Die letztere Variante ermöglicht insbesondere ein Abwägen von Gefahren auch in Bezug auf weitere Landungskriterien, beispielsweise unter Berücksichtigung einer für eine weitere Nutzung vorteilhaften Umgebung eines Landeortes.

Gemäß vorteilhaften Ausführungsformen enthält das Ergebnisbild mindestens einen Ausschnitt des mit Markierungen versehenen aufgenommenen Bildes. Das Ergebnisbild ist dann also eine Modifikation bzw. Überlagerung des aufgenommenen Bildes bzw. eines Ausschnitts desselben, in dem Markierungen ergänzt wurden; solche Ausführungsformen ermöglichen einem Betrachter eine besonders bequeme Zuordnung von Gefahren zu jeweiligen geographischen Gegebenheiten des jeweiligen Geländes. Die Markierungen sind dabei vorzugsweise abhängig von einem jeweiligen Gefahrenwert. So können sie beispielsweise Punkte bzw. Bereiche kennzeichnen, für die eine Landegefahr prognostiziert wird (beispielsweise indem ein berechneter Gefahrenwert in einem (ersten) vorbestimmten Wertebereich liegt) oder in denen eine ausreichend sichere Landung prognostiziert wird (beispielsweise indem ein berechneter Gefahrenwert in einem vorbestimmten (zweiten) Wertebereich liegt).

Das Transformieren der Bilddaten und/oder das Erstellen der Gefahrenkarte wird vorzugsweise vollautomatisch oder teilautomatisch durch eine Auswertungselektronik (also eine Rechnereinheit) durchgeführt, die mindestens teilweise in die Kamera integriert oder separat von der Kamera ausgebildet sein kann; im letzteren Fall umfasst das Verfahren vorzugsweise ein Übermitteln der erzeugten Bilddaten von der Kamera an die Auswertungselektronik.

Ein erfindungsgemäßes System dient einer Gefahrenerkennung bei einer extraterrestrischen Landung, speziell wenn diese teil- oder vollautomatisch erfolgt. Es umfasst mindestens eine monokulare Kamera und ist dazu eingerichtet, ein erfindungsgemäßes Verfahren gemäß einer der in dieser Schrift offenbarten Ausführungsformen auszuführen. Insbesondere ist also die monokulare Kamera dazu eingerichtet, durch Aufnehmen eines Bildes von einem Gelände eine Mehrzahl an digitalen Bilddaten zu erzeugen, und eine separate oder mindestens teilweise zur Kamera gehörige Auswertungselektronik des Systems ist dazu eingerichtet, die Gefahrenkarte zu erstellen und dabei insbesondere die Bilddaten wie oben beschrieben zu transformieren. Dabei kann das System ggf. Kommunikationsmittel umfassen, die ein Übermitteln der erzeugten Bilddaten an die Auswertungselektronik ermöglichen.

Die monokulare Kamera eines erfindungsgemäßen Systems kann insbesondere an einem Raumfahrzeug (speziell einer Landefähre) angeordnet und dazu eingerichtet sein, einen Teil von dessen Umgebung bildlich zu erfassen.

Durch die Verwendung einer monokularen Kamera ermöglicht die vorliegende Erfindung, bei der Erstellung von Gefahrenkarten auf die Verwendung schwererer, voluminöserer, energieaufwendigerer und stärker wärmeproduzierender Sensoren wie beispielsweise eines 3D-LIDARS zur Geländeabtastung zu verzichten. So können eine Energieersparnis sowie eine Masse- und Volumenreduktion am jeweiligen Raumfahrzeug erreicht werden. Darüber hinaus bietet ein erfindungsgemäßes Verfahren den Vorteil, dass keine aufwendigen Berechnungen für eine Entzerrung von abgetasteten 3D-Punktwolken benötigt werden, wie sie üblicherweise bei abtastenden Verfahren erforderlich ist. Auch auf eine aufwendige Kombination eines abtastenden LIDARS mit IMU-Messungen eines jeweiligen Raumfahrzeugs zur Kompensation einer reduzierten Auflösung am Boden durch eine explizite Kontrolle des Laserstrahl kann vorteilhaft verzichtet werden.

Insbesondere können mit der im Vergleich zur herkömmlichen Sensorik schnellen Kamera und aufgrund der vereinfachten Berechnung bei einer gegebenen Fluggeschwindigkeit mehr Aufnahmen gemacht und zugehörige Gefahrenkarten berechnet werden, so dass die jeweiligen Gefahrenkarten besonders gut und unter Vermeidung von Zeitverzögerungen mit den jeweiligen Flugpositionen und Ausrichtungen synchronisiert werden können.

Gemäß vorteilhaften Ausführungsformen der vorliegenden Erfindung umfasst der Transformationsoperator weiterhin einen oder mehrere nichtlineare Operatoren, wie insbesondere mindestens einen Max-Pooling-Operator, mindestens einen Unterabtastungsoperator und/oder mindestens eines Überabtastungsoperator. Die Mehrzahl an Operatoren, aus denen sich der Transformationsoperator wie oben erwähnt zusammensetzt, umfasst also mindestens einen derartigen nichtlinearen Operator. Vorzugsweise ist dann der mindestens eine derartige nichtlineare Operator (oder ggf. alle derartigen Operatoren) nach der Mehrzahl an verketteten Faltungsoperatoren (insbesondere auf deren Ergebnis) anzuwenden.

Alternativ oder zusätzlich kann der Transformationsoperator eine oder mehrere nichtlineare Aktivierungsfunktion(en) umfassen, die dann also zu der genannten Mehrzahl an Operatoren gehört/gehören. Vorzugsweise ist dann die mindestens eine nichtlineare Aktivierungsfunktion (im genannten Sinne) nach der Mehrzahl an verketteten Faltungsoperatoren anzuwenden. Im Falle, dass der Transformationsoperator zusätzlich mindestens einen oder mehrere nichtlineare/n Operatoren wie oben beschrieben umfasst, kann die mindestens eine Aktivierungssystem insbesondere nach mindestens einem dieser nichtlinearen Operatoren anzuwenden sein.

Der Transformationsoperator ist ein mittels eines (künstlichen) tiefen neuronalen Netzwerks (auch englisch als "deep neural network" (DNN) bezeichnet) maschinell gelernter Operator.

Das Erstellen einer Gefahrenkarte umfasst ein Bestimmen des Transformationsoperators durch Ausbilden eines (künstlichen) tiefen neuronalen Netzwerks mittels maschinellen Lernens. Letzteres kann beispielsweise insbesondere eine Gradientenabstiegsoptimierung mit Hilfe einer Fehlerrückführung (also eines Back-Propagations-Algorithmus') umfassen. Insbesondere fällt das tiefe neuronale Netzwerk in die Klasse der Faltungsnetzwerke (für die auch die englische Bezeichnung "convolutional neural network" (CNN) gebräuchlich ist).

Ein derart erlernter Transformationsoperator ermöglicht es, die (jeweilige) Gefahrenkarte ohne explizites Wissen über die dreidimensionale Struktur eines jeweiligen Geländes und gleichwohl in hoher Qualität zu erstellen. Insbesondere kann damit auf rechenaufwendige 3D-Rekonstruktionen des Geländes verzichtet werden.

Zum Ausbilden des tiefen neuronalen Netzwerks als Trainings-, Test- und/oder Validierungsdatensatz verwendete Beispielbildpaare umfassen vorzugsweise jeweils ein aufgenommenes oder künstlich erzeugtes Bild sowie eine zugehörige Beispielgefahren- und/oder Beispielgeländekarte.

Die jeweiligen Beispielgefahren- bzw. Beispielgeländekarten können dabei für mindestens einen Teil der Beispielbildpaare aus vorbekannten realen und/oder modellierten topographischen Karten, insbesondere Höhenkarten berechnet werden bzw. worden sein. Dabei kann insbesondere die dreidimensionale Struktur des jeweiligen Geländes (beispielsweise eine jeweilige Steigung, Krater, Kraterränder, Spalten etc.) berücksichtigt werden. Vorzugsweise sind die Beispielgefahren- bzw. Beispielgeländekarten jeweils bildlich darstellbar; eine entsprechende bildliche Kartendarstellung ist dabei vorzugsweise pixelkonform zum zugehörigen Bild, **d.h.** Bildpunkte in der Kartendarstellung zeigen jeweils einen Gefahrenwert bzw. einen Geländeneigungswert in dem Punkt bzw. Bereich des Geländes an, der durch ein in seiner Position mit dem jeweiligen Bildpunkt entsprechendes Pixel erfasst ist.

Beispielsweise können die Beispielbildpaare reale Kamerabilder mit dazu gehörigen Beispielgefahren- und/oder Beispielgeländekarten umfassen. Insbesondere aus früheren Weltraummissionen liegt umfassendes Bilddatenmaterial mit zugehörigen Höhendaten vor, aus denen sich zugehörige Beispielgefahren- und/oder Beispielgeländekarte berechnen lassen.

Alternativ oder zusätzlich können aus künstlich erzeugten Geländemodellen generierte (also "gerenderte") Bilder mit dazu gehörigen Beispielgefahren- und/oder Beispielgeländekarten als Beispielbildpaare zum Trainieren, Testen und/oder Validieren des tiefen neuronalen Netzwerks verwendet werden. Auf diese Weise steht eine große Menge an Bilddaten zu Verfügung, insbesondere wird damit eine vollständige Kontrolle über eine Richtung der jeweiligen Sonneneinstrahlung ermöglicht.

Gemäß vorteilhaften Ausführungsformen der vorliegenden Erfindung wird eine Mehrzahl der Beispielbildpaare generiert, indem (als die generierten Bilder) insbesondere aus mindestens einem künstlichen Geländemodell mehrere virtuelle Ansichten erzeugt (also "gerendert") sowie die dazu jeweils gehörigen Beispielgefahren- und/oder Beispielgeländekarten berechnet werden. Die virtuellen Ansichten stellen dabei mindestens einen Geländebereich unter voneinander verschiedenen Beleuchtungsbedingungen (insbesondere bei voneinander verschiedenen Beleuchtungsrichtungen) und/oder mit unterschiedlichen Reflexionseigenschaften der Oberfläche dar. Auf diese Weise wird das tiefe neuronale Netzwerk besonders umfassend und breit gefächert angelernt und auf die verschiedensten in der Realität auftretenden Erscheinungen eingestellt. Der mit dem Netzwerk ermittelte Transformationsoperator wird damit so bestimmt, dass seine Anwendung auf die Bilddaten besonders zuverlässige Gefahrenkarten liefert.

Sofern die monokulare Kamera zu einem Raumfahrzeug gehört und das Bild während eines Flugs des Raumfahrzeugs, insbesondere während eines Landeanflugs auf einen Himmelskörper aufgenommen wird, kann das Ausbilden eines tiefen neuronalen Netzwerks bzw. das Bestimmen des Transformationsoperators und/oder das Generieren einer Mehrzahl an Beispielbildpaaren bei derartigen Ausführungsformen vollständig oder teilweise vor einem Start des Flugs auf der Erde erfolgen. Auf diese Weise kann die mitzuführende, ausführende Einrichtung möglichst einfach gehalten werden.

Entsprechend kann in Ausführungsformen eines erfindungsgemäßen Systems, die zum Ausführen eines derartigen Verfahrens eingerichtet sind, das Ausbilden des tiefen neuronalen Netzwerks bzw. das Bestimmen des Transformationsoperators und/oder das Generieren einer Mehrzahl an Beispielbildpaaren durch eine Rechnereinheit erfolgen, die das System zusätzlich zu einer Auswertungselektronik zum Transformieren der jeweiligen Bilddaten umfassen kann. Die Rechnereinheit ist dann vorzugsweise separat von der Auswertungselektronik, insbesondere ist sie vorzugsweise separat von einem die monokulare Kamera und die Auswertungselektronik mitführenden Raumfahrzeug.

Ein erfindungsgemäßes Landungssteuerungsverfahren dient einer Steuerung eines Raumfahrzeugs bei einem extraterrestrischen Landeanflug. Zur Unterscheidung des Landungssteuerungsverfahrens von dem erfindungsgemäßen Verfahren zum Erstellen einer Gefahrenkarte wird letzteres in dieser Schrift zuweilen auch als "erstes" erfindungsgemäßes Verfahren bezeichnet.

Das erfindungsgemäße Landungssteuerungsverfahren umfasst ein Erstellen einer Gefahrenkarte gemäß einer der in dieser Schrift offenbarten Ausführungsformen eines erfindungsgemäßen ersten Verfahrens. Darüber hinaus umfasst das Landungssteuerungsverfahren ein automatisches Auswählen eines Landeortes anhand der erstellten Gefahrenkarte sowie ein Ansteuern **(bzw.** Anfliegen) des ausgewählten Landeorts mit dem Raumfahrzeug.

Das Auswählen kann insbesondere ein Feststellen umfassen, dass eine in der Gefahrenkarte ausgewiesene Gefahr **(bzw.** ihr Gefahrenwert) niedriger als eine vorbestimmte Schwelle ist und/oder im Vergleich zur Gefahr an mehreren potentiellen Landeorten am niedrigsten **ist.**

Der ausgewählte Landeort kann sich von einem zuvor geplanten Landeort unterscheiden. Das Auswählen kann dann insbesondere ein Erkennen einer möglichen Gefahr an dem zuvor geplanten Landeort sowie ein Verwerfen des zuvor geplanten Landeortes umfassen. Insbesondere kann das Landungssteuerungsverfahren zum Anfliegen des ausgewählten Landeortes eine Kursänderung vom zuvor geplanten Landeort zum ausgewählten Landeort, insbesondere also ein Ausweichmanöver umfassen.

Gemäß vorteilhaften Ausführungsformen ist ein erfindungsgemäßes System dazu eingerichtet, ein erfindungsgemäßes Landungssteuerungsverfahren gemäß einer der in dieser Schrift offenbarten Varianten auszuführen. Insbesondere umfasst es in diesem Fall vorzugsweise eine Steuerungseinrichtung zum Steuern eines Landeflugs des Raumfahrzeugs.

Ein erfindungsgemäßes Raumfahrzeug umfasst eine monokulare Kamera und ist dazu eingerichtet, eine extraterrestrische Landung an einem durch Anwenden eines erfindungsgemäßen Landungssteuerungsverfahrens ausgewählten Landeort vorzunehmen, vorzugsweise teil- oder vollautomatisch (autonom). Insbesondere kann ein erfindungsgemäßes Raumfahrzeug ein erfindungsgemäßes System gemäß einer der in dieser Schrift offenbarten Ausführungsformen umfassen.

Im Fall, dass das Landungssteuerungsverfahren wie oben genannt ein Verwerfen eines zuvor geplanten Landeortes umfasst, kann das Raumfahrzeug insbesondere dazu eingerichtet sein, einen Landeanflug auf den ursprünglich geplanten Landeort abzubrechen (ehe es am ausgewählten Landeort landet).

Im Folgenden wird vorliegende Erfindung exemplarisch anhand zweier Zeichnungen näher erläutert.

Es zeigen schematisch:
- Figur 1:: ein aufgenommenes Bild und eine bildlich dargestellte zugehörige Gefahrenkarte; und
- Figur 2:: einen exemplarischen Ablauf einer Ausführungsform eines erfindungsgemäßen Verfahrens zum Erstellen einer Gefahrenkarte.

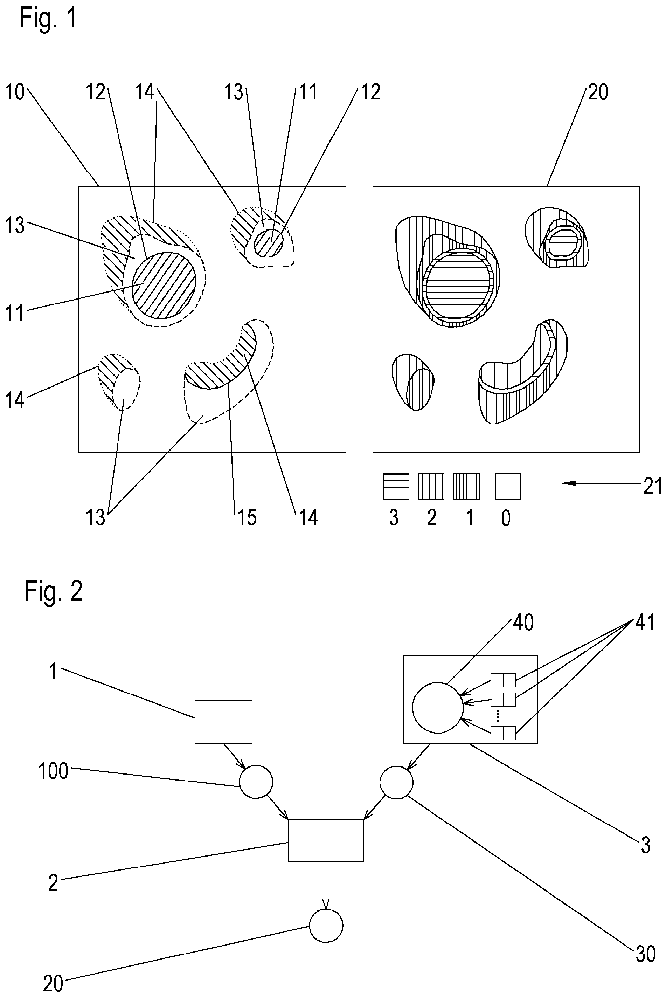

In Figur 1 sind ein Bild 10 und eine zugehörige, bildlich dargestellte Gefahrenkarte 20 jeweils schematisch dargestellt.

Das Bild 10 kann dabei mittels einer monokularen Kamera aufgenommen sein, und die Gefahrenkarte 20 kann gemäß einer Ausführungsform eines erfindungsgemäßen Verfahrens zu einem unbekannten Gelände automatisch erstellt worden sein. Insbesondere kann die Gefahrenkarte 20 mittels Anwendung eines maschinell erlernten Transformationsoperators auf zu dem Bild 10 gehörige Bilddaten automatisch erstellt worden sein.

Ebenso können das Bild 10 und die Gefahrenkarte 20 zusammen ein Beispielbildpaar zum Trainieren, Testen oder Validieren eines tiefen neuronalen Netzwerks bilden, mittels dessen gemäß einer Ausführungsform eines erfindungsgemäßen Verfahrens ein Transformationsoperator (wie oben beschrieben) bestimmt werden oder worden sein kann. Das Bild 10 kann dabei eine reale Aufnahme eines Geländes oder künstlich aus mindestens einem Geländemodell generiert sein; insbesondere kann das Bild eine virtuelle Ansicht eines Geländes sein. Die Gefahrenkarte 20 kann dann als Beispielgefahrenkarte unter Verwendung bekannter oder modellierter topographischer Eigenschaften, insbesondere unter Verwendung von Höhenlinien berechnet worden sein.

Das Bild 10 zeigt in dem erfassten Gelände zwei Krater 11 mit zugehörigen Kraterrändern 12, zu denen hin das umliegende Gelände (senkrecht zur Bildebene) in Neigungsbereichen 13 um mindestens ein vorgegebenes Maß (also wenigstens einen vorbestimmten Winkel) ansteigt. Die Krater 11 mit ihren Neigungsbereichen 13 werfen dabei in der erfassten Beleuchtungssituation Schatten 14, in denen das Gelände nicht erkennbar ist.

Auch die beiden unten im Bild 10 gezeigten Erhebungen mit ihren Neigungsbereichen 13 werfen jeweils einen Schatten 14. Die unten rechts im Bild 10 gezeigte Erhebung bildet dabei einen Grat 15 aus.

In der bildlich dargestellten Gefahrenkarte 20 sind die jeweiligen Gegebenheiten hinsichtlich einer jeweiligen Gefahr bewertet, die eine Landung an den verschiedenen Punkten bedeuten würde. Dabei ist die Darstellung der Gefahrenkarte pixelkonform zum Bild 10, ihre Bildpunkte in der bildlichen Darstellung entsprechen in ihrer jeweiligen Position also einem jeweils zugehörigen Pixel des Bildes 10 und geben die Gefahr einer Landung im von diesem Pixel erfassten Punkt bzw. Bereich im Gelände an.

Im vorliegenden Fall sind den verschiedenen Bildpunkten jeweils einer von den Gefahrenwerte 0, 1, 2 und 3 zugeordnet, die - wie in der Figur 1 durch jeweilige Schraffierungen kenntlich gemacht ist - jeweils graphisch dargestellt sind, beispielsweise farblich oder durch jeweilige Grauwerte. Eine Legende 21 verdeutlicht die jeweilige Zuordnung. Es versteht sich, dass andere Zuordnungen ebenfalls im Rahmen der vorliegenden Erfindung liegen.

Im in der Figur 1 gezeigten Beispiel ist Punkten in als ausreichend sicher beurteilten Gebieten des im Bild 10 gezeigten Geländes jeweils ein Gefahrenwert 0 zugeordnet. Das jeweilige Innere der Krater 11 sowie eine unmittelbare Umgebung der Kraterränder 12 wurden mit dem (gemäß dem gezeigten Beispiel) höchsten Gefahrenwert 3 beurteilt. Den Neigungsbereichen 13 wurde jeweils der Gefahrenwert 2 zugeordnet. In den Schattenbereichen 14 sind die Gegebenheiten nicht vollständig zu erkennen, weswegen sie nicht als sicher beurteilt wurden, sondern mit einem Gefahrenwert 1 gekennzeichnet wurden.

Mit einem erfindungsgemäßen Landungssteuerungsverfahren könnte beispielsweise auf Grundlage der Gefahrenkarte ein nicht schraffierter Bereich als Landeort ausgewählt werden. Unter den verschiedenen solchen Bereichen könnte dabei mindestens ein weiteres Kriterium wie beispielsweise eine vorteilhafte Mindestgröße des Landeorts und/oder vorgegebene Umgebungsbedingungen berücksichtigt werden.

In der Figur 2 ist schematisch eine Ausführungsform eines erfindungsgemäßen Verfahrens zum Erstellen einer Gefahrenkarte verdeutlicht. Dabei wird mittels einer monokularen Kamera 1 ein Bild eines (nicht dargestellten) Geländes aufgenommen und damit eine Mehrzahl an digitalen Bilddaten 100 erzeugt. Die Bilddaten 100 werden einer (vorliegend von der Kamera 1 separaten) Auswertungselektronik 2 zugeführt. Diese ist dazu eingerichtet, aus den erhaltenen Bilddaten durch Anwendung eines Transformationsoperators 30 automatisch eine Gefahrenkarte 20 zu erstellen. Der Transformationsoperator 30 umfasst dabei eine Mehrzahl an verketteten Faltungsoperationen.

Insbesondere können dabei die transformierten Bilddaten bereits die Gefahrenkarte 20 ergeben; alternativ können die transformierten Bilddaten eine Geländeneigungskarte ergeben (nicht dargestellt), aus der die Gefahrenkarte 20 bestimmt wird.

Gemäß der dargestellten Ausführungsform wird der Transformationsoperator 30 zuvor mittels eines tiefen neuronalen Netzwerks 40 bestimmt und der Auswertungselektronik 2 zugeführt. Das tiefe neuronale Netzwerk 40 wird dabei von einer Rechnereinheit 3 unter Verwendung einer Mehrzahl an Beispielbildpaaren 41 ausgebildet, die jeweils ein Bild und eine dazu gehörige Beispielgefahren- und/oder Beispielgeländekarte umfassen.

Die Rechnereinheit 3 ist vorliegend separat von der Auswertungselektronik 2 und der monokularen Kamera 1 ausgebildet. Insbesondere können die monokulare Kamera 1 und die Auswertungselektronik 2 Teil eines (erfindungsgemäßen) Raumfahrzeugs sein, und die Rechnereinheit 30 kann Teil einer terrestrischen Basis- **bzw.** Entwicklungsstation für das Raumfahrzeug sein (nicht dargestellt).

Die Erfindung betrifft ein Verfahren zum Erstellen einer Gefahrenkarte 20, bei dem eine Mehrzahl an digitalen Bilddaten 100 durch Aufnehmen eines Bildes 10 von einem Gelände mittels einer monokularen Kamera 1 erzeugt werden und die Gefahrenkarte 20 automatisch erstellt wird. Dazu werden die erzeugten Bilddaten 100 mittels eines eine Mehrzahl an verketteten Faltungsoperationen umfassenden Transformationsoperators 30 transformiert.

Darüber hinaus hat die Erfindung ein Landungssteuerungsverfahren zur Steuerung eines Raumfahrzeugs bei einem extraterrestrischen Landeanflug, ein System zur Gefahrenerkennung und ein Raumfahrzeug zum Gegenstand, das dazu eingerichtet ist, auf einem Himmelskörper zu landen.

### Bezugszeichen

- 1: monokulare Kamera
- 2: Auswertungselektronik
- 3: Rechnereinheit

- 10: Bild
- 11: Krater
- 12: Kraterrand
- 13: Neigungsbereich
- 14: Schattenbereich
- 15: Grat

- 20: (bildlich dargestellte) Gefahrenkarte
- 21: Legende

- 30: Transformationsoperator

- 40: tiefes neuronales Netzwerk
- 41: Beispielbildpaar

- 100: Bilddaten

## Patentansprüche

1. Verfahren zum Erstellen einer Gefahrenkarte (20) in Bezug auf ein Gelände bei einem extraterrestrischen Landeanflug, wobei das Verfahren umfasst:
- Erzeugen einer Mehrzahl an digitalen Bilddaten (100) durch Aufnehmen eines Bildes (10) von dem Gelände mittels einer Kamera (1); und
- automatisches Erstellen der Gefahrenkarte (20), wobei das Erstellen ein Transformieren der Bilddaten durch Anwenden eines Transformationsoperators (30) auf die Bilddaten einschließt, der eine Mehrzahl an verketteten Faltungsoperationen umfasst,
wobei das Verfahren zudem ein Bestimmen des Transformationsoperators (30) durch ein Ausbilden eines tiefen neuronalen Netzwerks (40) mittels maschinellen Lernens umfasst **dadurch gekennzeichnet, dass**
die Kamera (1) eine monokulare Kamera ist und der Transformationsoperator (30) ein mittels des tiefen neuronalen Netzwerks (40) maschinell gelernter Operator ist,
wobei die transformierten Bilddaten eine Geländeneigungskarte ergeben und die Gefahrenkarte (20) aus der Geländeneigungskarte bestimmt wird,
wobei die Geländeneigungskarte als Einträge Werte enthält, die eine jeweilige Neigung des Geländes in einem jeweils einem Eintrag zugeordneten Punkt angeben, sofern die Neigung in dem jeweiligen Punkt bestimmt werden kann.

2. Verfahren gemäß Anspruch 1, wobei die transformierten Bilddaten die Gefahrenkarte (20) ergeben.

3. Verfahren gemäß einem der vorhergehenden Ansprüche, wobei der Transformationsoperator (30) zudem
- einen oder mehrere nichtlineare Operator/en, wie insbesondere mindestens einen Max-Pooling-Operator, mindestens einen Unterabtastungsoperator und/oder mindestens eines Überabtastungsoperator; und/oder
- eine oder mehrere nichtlinearer Aktivierungsfunktion/en
umfasst.

4. Verfahren gemäß einem der vorhergehenden Ansprüche, wobei das Ausbilden des tiefen neuronalen Netzwerks (40) ein Verwenden von Beispielbildpaaren (41)
- aus realen Kamerabildern und dazu gehörigen Beispielgefahren- und/oder Beispielgeländekarten; und/oder
- aus künstlich aus erzeugten Geländemodellen generierten Bildern mit dazu gehörigen Beispielgefahren- und/oder Beispielgeländekarten
zum Trainieren, Testen und/oder Validieren des tiefen neuronalen Netzwerks (40) umfasst.

5. Verfahren gemäß Anspruch 4, das ein Berechnen einer oder mehrerer der Beispielgefahren- und/oder Beispielgeländekarten aus vorbekannten realen und/oder modellierten topographischen Karten, insbesondere Höhenkarten umfasst.

6. Verfahren gemäß einem der vorhergehenden Ansprüche, das ein Generieren einer Mehrzahl der Beispielbildpaare (41) umfasst, bei dem aus mindestens einem künstlichen Geländemodell mehrere virtuelle Ansichten erzeugt sowie die dazu jeweils gehörigen Beispielgefahren- und/oder Beispielgeländekarten berechnet werden, wobei die virtuellen Ansichten mindestens einen Geländebereich unter voneinander verschiedenen Beleuchtungsbedingungen und/oder mit unterschiedlichen Reflexionseigenschaften der Oberfläche darstellen.

7. Landungssteuerungsverfahren zur Steuerung eines Raumfahrzeugs bei einem extraterrestrischen Landeanflug, das ein Erstellen mindestens einer Gefahrenkarte (20) mittels Ausführens eines Verfahrens gemäß einem der Ansprüche 1 bis 6, ein automatisches Auswählen eines Landeorts auf Grundlage der erstellten Gefahrenkarte sowie ein Ansteuern des ausgewählten Landeorts mit dem Raumfahrzeug umfasst.

8. System zur Gefahrenerkennung, wobei das System mindestens eine monokulare Kamera (1) umfasst und dazu eingerichtet ist, ein Verfahren gemäß einem der vorhergehenden Ansprüche auszuführen.

9. System gemäß Anspruch 8, wobei die monokulare Kamera (1) an einem Raumfahrzeug, insbesondere einer Landefähre angeordnet ist.

10. Raumfahrzeug zur extraterrestrischen Landung, wobei das Raumfahrzeug eine monokulare Kamera (1) umfasst und dazu eingerichtet ist, ein Landungssteuerungsverfahren gemäß Anspruch 7 auszuführen sowie an einem damit automatisch ausgewählten Landeort zu landen.

## Claims

1. A method for creating a hazard map (20) relating to a terrain during an extraterrestrial landing approach, wherein the method comprises:
- generating a plurality of digital image data (100) by capturing an image (10) of the terrain by means of a camera (1); and
- automatically creating the hazard map (20), wherein the creation includes a transformation of the image data by applying a transformation operator (30) comprising a plurality of concatenated convolution operations to the image data,
wherein the method furthermore comprises a determination of the transformation operator (30) by training a deep neural network (40) by means of machine learning,
**characterized in that**
the camera (1) is a monocular camera and the transformation operator (30) is an operator machine-learned by the deep neural network (40),
wherein the transformed image data yields a terrain slope map and the hazard map (20) is determined from the terrain slope map, and
wherein the terrain slope map contains entries in the form of values that indicate a respective slope of the terrain at a point assigned to each entry as long as the slope at the respective point can be determined.

2. The method according to claim 1, wherein the transformed image data yields the hazard map (20).

3. The method according to one of the preceding claims, wherein the transformation operator (30) furthermore comprises
- one or more nonlinear operator/s such as, in particular, at least one max-pooling operator, at least one undersampling operator and/or at least one oversampling operator; and/or
- one or more nonlinear activation function/s.

4. The method according to one of the preceding claims, wherein training of the deep neural network (40) comprises the use of example image pairs (41)
- from real camera images and associated example hazard maps and/or example terrain maps; and/or
- from images artificially generated from created terrain models with associated example hazard maps and/or example terrain maps in order to train, test and/or validate the deep neural network (40).

5. The method according to claim 4, comprising a calculation of one or more of the example hazard maps and/or example terrain maps from previously known real and/or modeled topographic maps, particularly elevation maps.

6. The method according to one of the preceding claims, comprising the generation of a plurality of example image pairs (41), in which multiple virtual views are generated from at least one artificial terrain model and the respectively associated example hazard maps and/or example terrain maps are calculated, wherein the virtual views represent at least one terrain area under different lighting conditions and/or with different surface reflection properties.

7. A landing control method for controlling a spacecraft during an extraterrestrial landing approach, wherein said method comprises the creation of at least one hazard map (20) by carrying out a method according to one of claims 1 to 6, an automatic selection of a landing site based on the created hazard map, as well as the navigation to the selected landing site with the spacecraft.

8. A hazard detection system, wherein the system comprises at least one monocular camera (1) and is designed for carrying out a method according to one of the preceding claims.

9. The system according to claim 8, wherein the monocular camera (1) is arranged on a spacecraft, particularly a landing module.

10. A spacecraft for extraterrestrial landing, wherein the spacecraft comprises a monocular camera (1) and is designed for carrying out a landing control method according to claim 7, as well as for landing at a landing site automatically selected with said landing control method.

## Revendications

1. Procédé d'élaboration d'une carte des dangers (20) relative à un terrain lors d'une phase d'approche pour un atterrissage extraterrestre, dans lequel le procédé comprend :
- la génération d'une pluralité de données d'image numériques (100) par la prise d'une image (10) du terrain au moyen d'une caméra (1) ; et
- l'élaboration automatique de la carte des dangers (20), dans lequel l'élaboration inclut une transformation des données d'image par application, aux données d'image, d'un opérateur de transformation (30), qui comprend une pluralité d'opérations de convolution enchaînées,
dans lequel le procédé comprend en outre une détermination de l'opérateur de transformation (30) par l'entraînement d'un réseau de neurones profond (40) au moyen d'un apprentissage automatique,
**caractérisé en ce que**
la caméra (1) est une caméra monoculaire et l'opérateur de transformation (30) est un opérateur ayant fait l'objet d'un apprentissage automatique au moyen du réseau de neurones profond (40),
dans lequel
les données d'image transformées fournissent une carte de pente du terrain et la carte des dangers (20) est déterminée à partir de la carte de pente du terrain,
dans lequel
la carte de pente du terrain contient, en tant que valeurs d'entrées, des valeurs qui indiquent une pente respective du terrain en un point associé à chaque entrée, pour autant que la pente puisse être déterminée au point considéré.

2. Procédé selon la revendication 1, dans lequel les données d'image transformées constituent la carte des dangers (20).

3. Procédé selon une des revendications précédentes, dans lequel l'opérateur de transformation (30) comprend en outre
- un ou plusieurs opérateurs non linéaires, tels que notamment au moins un opérateur de « max-pooling », au moins un opérateur de sous-échantillonnage et/ou au moins un opérateur de suréchantillonnage ; et/ou
- une ou plusieurs fonctions d'activation non linéaires.

4. Procédé selon une des revendications précédentes, dans lequel l'élaboration du réseau de neurones profond (40) comprend une utilisation de paires d'images d'exemple (41)
- constituées d'images réelles de caméra et de cartes de dangers et/ou de cartes de terrain d'exemple correspondantes ; et/ou
- constituées d'images générées à partir de modèles de terrain artificiels, avec des cartes de dangers et/ou des cartes de terrain d'exemple correspondantes, pour l'entraînement, le test et/ou la validation du réseau de neurones profond (40).

5. Procédé selon la revendication 4, qui comprend un calcul d'une ou plusieurs des cartes de dangers et/ou des cartes de terrain d'exemple à partir de cartes topographiques réelles et/ou modélisées connues au préalable, notamment des cartes altimétriques.

6. Procédé selon une des revendications précédentes, qui comprend une génération d'une pluralité de paires d'images d'exemple (41), au cours de laquelle plusieurs vues virtuelles sont générées à partir d'au moins un modèle de terrain artificiel et les cartes de dangers et/ou les cartes de terrain d'exemple correspondantes sont calculées, dans lequel les vues virtuelles représentent au moins une zone de terrain dans des conditions d'éclairage différentes les unes des autres et/ou avec des propriétés de réflexion de la surface différentes.

7. Procédé de commande d'atterrissage pour piloter un engin spatial lors d'une phase d'approche pour un atterrissage extraterrestre, qui comprend un établissement d'au moins une carte de dangers (20) au moyen de la mise en œuvre d'un procédé selon une des revendications 1 à 6, ainsi qu'une sélection automatique d'un site d'atterrissage sur la base de la carte de dangers établie et un pilotage de l'engin spatial vers le site d'atterrissage sélectionné.

8. Système de détection de dangers, dans lequel le système comprend au moins une caméra monoculaire (1) et est configuré pour mettre en œuvre un procédé selon une des revendications précédentes.

9. Système selon la revendication 8, dans lequel la caméra monoculaire (1) est disposée sur un engin spatial, notamment un atterrisseur.

10. Engin spatial destiné à un atterrissage extraterrestre, dans lequel l'engin spatial comprend une caméra monoculaire (1) et est configuré pour mettre en œuvre un procédé de commande d'atterrissage selon la revendication 11, ainsi que pour atterrir sur un site d'atterrissage sélectionné automatiquement à cet effet.
